(19) **Europäisches Patentamt / European Patent Office / Office européen des brevets**

(11) **EP 1 861 822 B1**

(12) **EUROPÄISCHE PATENTSCHRIFT**

(45) Veröffentlichungstag und Bekanntmachung des Hinweises auf die Patenterteilung:
**20.07.2011 Patentblatt 2011/29**

(21) Anmeldenummer: **06723480.7**

(22) Anmeldetag: **16.03.2006**

(51) Int Cl.:
**G06T 5/00** $^{(2006.01)}$

(86) Internationale Anmeldenummer:
**PCT/EP2006/002436**

(87) Internationale Veröffentlichungsnummer:
**WO 2006/097315 (21.09.2006 Gazette 2006/38)**

(54) **VERFAHREN UND VORRICHTUNG ZUR KONTURFEINERMITTLUNG EINES OBJEKTS BEI BILDGEBENDEN UNTERSUCHUNGSVERFAHREN**

METHOD AND DEVICE FOR A PRECISE CONTOUR DETERMINATION OF AN OBJECT DURING AN IMAGING ANALYSIS METHOD

PROCEDE ET DISPOSITIF POUR DETERMINER AVEC PRECISION LE CONTOUR D'UN OBJET POUR DES METHODES D'ANALYSE PAR IMAGERIE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **16.03.2005 DE 102005012094**

(43) Veröffentlichungstag der Anmeldung:
**05.12.2007 Patentblatt 2007/49**

(73) Patentinhaber: **Werth Messtechnik GmbH
35394 Giessen (DE)**

(72) Erfinder: **STEINBEISS, Heinrich
85055 Ingolstadt (DE)**

(74) Vertreter: **Stoffregen, Hans-Herbert
Patentanwalt
Friedrich-Ebert-Anlage 11b
63450 Hanau (DE)**

(56) Entgegenhaltungen:
**WO-A2-02/43004**

- **MCCARTHY S ET AL: "Segmentation algorithm for objects with very low edge contrast" PROCEEDINGS OF THE SPIE - THE INTERNATIONAL SOCIETY FOR OPTICAL ENGINEERING SPIE-INT. SOC. OPT. ENG USA, Bd. 5608, Nr. 1, 2004, Seiten 162-168, XP002404854 ISSN: 0277-786X**
- **ISAAC N BANKMAN ET AL: "Segmentation Algorithms for Detecting Microcalcifications in Mammograms" IEEE TRANSACTIONS ON INFORMATION TECHNOLOGY IN BIOMEDICINE, IEEE SERVICE CENTER, LOS ALAMITOS, CA, US, Bd. 1, Nr. 2, Juni 1997 (1997-06), XP011028275 ISSN: 1089-7771**

**Beschreibung**

Die Erfindung betrifft ein Verfahren und eine Vorrichtung zur Konturfeinermittlung eines Objekts bei bildgebenden Untersuchungsverfahren, bei denen über eine Aufnahme von Projektionsbildern des Untersuchungsobjekts eine dreidimensionale Darstellung des Untersuchungsobjektes rekonstruiert wird. Für die Darstellung des Untersuchungsobjekts werden Volumendaten gewonnen, aus denen die Lage der Oberflächenkontur über einen Schwellwert festgelegt wird und die Lage der Konturpunkte bestimmt wird.

In der Medizin werden in zunehmendem Maße bildgebende Verfahren angewendet, aus denen medizinische Volumendaten gewonnen werden, beispielsweise Computertomographie (CT), Magnetresonanztomographie (MRT) und 3D-Ultraschall. Durch eine möglichst detailgetreue Wiedergabe der Aufnahmen können medizinische Sachverhalte aus den Volumendatensätzen zuverlässig festgestellt werden und anhand der Lage und Ausdehnung räumlicher Körperstrukturen (Frakturen, Knochendefekte, Gefäßsysteme, etc.) Diagnose, Therapie und chirurgische Eingriffe unterstützt werden.

Im industriellen Umfeld werden bildgebende Durchstrahlungsverfahren für die zerstörungsfreie Prüfung von Bauteilen eingesetzt. Industrielle Röntgen-Computertomographie-Anlagen dienen dazu, Materialfehler (z.B. Poren, Lunker, Risse) zu detektieren sowie komplexe Bauteilgeometrien (einschließlich Hinterschnitten, Hohlräumen) in einem Meßvorgang zu erfassen. Der Einsatz der CT-Anlagen ermöglicht eine genaue und schnelle Bauteilanalyse. Dabei kann einerseits die Qualität der Bauteile, andererseits auch deren innere und äußere Geometrie erfaßt werden.

Eine CT-Messung beispielsweise gliedert sich bei derartigen Verfahren in drei Hauptschritte: Zunächst werden aus mehreren Blickwinkeln Projektionsbilder des Objektes aufgenommen. Die Projektionsdaten werden vorverarbeitet und anschließend ein 3D-CT-Volumen rekonstruiert. Die kleinste Auflösungseinheit des CT-Volumens, das sogenannte Voxel, wird durch einen Grauwert (Rekonstruktionswert) repräsentiert. Das CT-Volumen ist Ausgangsdatensatz für weiterführende Schritte wie Visualisierung, Fehlstellenanalyse und dimensionelles Messen. Für die Bestimmung der geometrischen Abmaße muß aus dem CT-Volumen die Objektkontur extrahiert werden. Diese wird von einer Vielzahl von Stützpunkten repräsentiert. Werden bei der Extraktion zusätzlich zu den Konturpunkten auch Informationen über deren Vernetzung gewonnen, kann die Kontur als Schalenmodell exportiert werden. Dessen Teilflächen sind über eine Auswärtsnormale orientiert. Bei der Berechnung der Kontur wird das CT-Volumen zunächst über einen vom Bediener vorgegebenen Schwellwert in den Objekt- und Hintergrundbereich segmentiert. Die Lage der Kontur wird anschließend subvoxelgenau durch Interpolation berechnet.

Eine Vielfalt von Methoden ist für die Konturextraktion bekannt. Sehr verbreitet ist die Erzeugung von Isoflächen aus dem Volumendatensatz, deren Stützpunkte mit einem vorzugebenden Schwellwert berechnet werden. Es wird dabei angenommen, daß die Kontur eine konstante Grauwertintensität (Isograuwert) besitzt.

So ist in der US 4 885 688 ein bei der Computertomographie (CT) angewendetes Verfahren der eingangs genannten Art beschrieben, bei dem eine 3D-Extraktionsmethode benutzt wird, um die 3D-Objektkontur aus dem CT-Volumen direkt zu gewinnen. Zugleich kann die korrekte Vernetzung der Punkte (z.B. zu Dreiecken) ermittelt werden.

Eine weit verbreitete Methode zur Konturextraktion ist die Marching-Cubes-Methode, die beispielsweise in der US 4 710 876 beschrieben ist. Ein aus acht benachbarten Voxeln zusammengesetzter virtueller Würfel wird darauf untersucht, ob zwischen zwei Voxelwerten einer Würfelkante die Konturgrenze verläuft oder nicht. Hierzu werden über einen vorgegebenen Schwellwert die Voxel in einen Objekt- und Umgebungsbereich segmentiert. Werden zwei benachbarte Voxel als Objekt- und Umgebungsbereich klassifiziert, wird die exakte Lage der Kontur über eine Interpolation bestimmt.

Bei derartigen 3D-Isoflächenextraktionsalgorithmen kommt es aufgrund von Fehlern im CT-Volumen und bei einem ungenügend angepaßten Schwellwert zur ungenauen Berechnung der Konturgrenze. Der Iso-Extraktionsprozeß führt so zu einer deutlich verschlechterten Meßgenauigkeit. Im folgenden werden die Ursachen der Fehler bei der 3D-Isokonturextraktion näher erläutert.

Die Rekonstruktion eines CT-Volumens geht von idealen Projektionsdaten, d.h. monochromatischer Röntgenstrahlung und alleiniger Abhängigkeit der Schwächungswerte von der Materialverteilung, aus. Da diese Voraussetzungen in der Praxis nicht gegeben sind, treten bei der CT-Messung Fehler (Artefakte) auf, die nicht oder nur teilweise unter erheblichem zeitlichen und rechnerischen Aufwand korrigiert werden können. Die Fehlerquellen führen zu "falschen" Rekonstruktionswerten (Grauwerten), die von den korrekten Werten abweichen. Wesentliche Fehlerquellen bei der CT-Messung sind:

- poly- statt monoenergetische Röntgenstrahlung (-> Strahlaufhärtungsartefakt)
- Veränderung der Röntgenenergieverteilung während der Messung
- unterschiedliche Sensitivität der Detektorpixel
- Kantenverschmierung im Röntgenkonverter des Detektors

Aufgrund von verschiedenen Fehlerursachen bei der Objektabbildung und -rekonstruktion kann es dabei im CT-Volumen im Übergangsbereich von Objekt zur Umgebung zu Kantenverschmierungen über mehrere Voxel (etwa drei bis sieben Voxel) kommen.

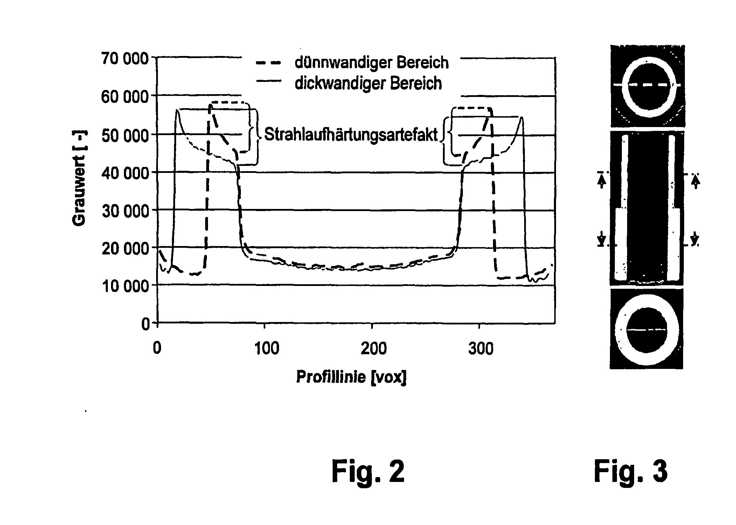

Beispielhaft wird das sogenannte Strahlaufhärtungsartefakt näher anhand von Fig. 2 und 3 erläutert. Fig. 2 und 3 zeigen Schnittbilder und Grauwert-Profillinien durch das CT-Volumen eines Hohlzylinders. Aufgrund des Artefakts werden an der Außenkontur für das Objekt höhere Grauwerte rekonstruiert als an der Innenkontur. Das Strahlaufhärtungsartefakt wird mit zunehmender Wandstärke größer. Es ist auf die polychromatische Energieverteilung des Strahlenspektrums zurückzuführen, welches von den Röntgenröhren emittiert wird. Die Absorption der Röntgenstrahlung im Untersuchungsobjekt, die u.a. von der Ordnungszahl des Objektmaterials abhängig ist, führt zu einer Verschiebung der mittleren Strahlungsenergie zu höheren Werten. Infolgedessen werden beim Strahlaufhärtungsartefakt für ein Material verschiedene Grauwerte abhängig von der Strahlungsabschwächung rekonstruiert. Weist das Untersuchungsobjekt Materialinhomogenitäten auf oder besteht es aus verschiedenen Materialien, so werden im Objektbereich lokal unterschiedliche Grauwerte rekonstruiert. Bei der Konturextraktion sind insbesondere Materialunterschiede an der Oberfläche von Bedeutung, wie z.B. Seigerungen und Beschichtungen.

Die Lage der Kontur ist abhängig vom gewählten Iso-Schwellwert. Wird der Iso-Schwellwert ungenau gewählt, so führt dies zu Abweichungen der extrahierten Kontur im Vergleich zur Objektkontur. Je größer der Iso-Schwellwert ist, desto weiter wandert die extrahierte Objektgrenze in das Objektinnere. Der Bediener muß den Schwellwert z.B. über ein Grauwerthistogramm, die Analyse von CT-Schichtbildern oder Referenzkörper berechnen. Da in realen CT-Volumina die Grauwertniveaus von Objekt- bzw. Hintergrund lokal verschieden sind, der Absolutwert der Grauwerte jedoch bei Iso-Extraktionsverfahren nicht berücksichtigt wird, kann der globale Iso-Schwellwert nur annähernd bestimmt werden.

Zur Lösung dieser Probleme sind verschiedene Wege beschritten worden. Um das Strahlaufhärtungsartefakt korrigieren zu können, wird gemäß einer Vorgehensweise vor der eigentlichen Messung zunächst die Röntgenstrahlschwächung für unterschiedliche Materialdicken z.B. an einem Stufenkeil bestimmt und eine Korrekturkennlinie aufgenommen. Diese wird verwendet, um bei der späteren Messung des Prüfobjekts eine Korrektur der Projektionsdaten zur Kompensation des Strahlaufhärtungsartefakts auszuführen. Weiter ist in der DE 102 02 732 AI ein iteratives Verfahren zur Strahlaufhärtungskorrektur beschrieben, bei dem anhand des Untersuchungsobjekts eine Korrekturkennlinie iterativ ermittelt und somit das Strahlaufhärtungsartefakt korrigiert werden kann. Derartige Vorversuche an einem Probekörper oder rechenintensive iterative Korrekturen sind zeitaufwendig. Zudem kann eine solche Korrektur nur an Untersuchungsobjekten durchgeführt werden, die aus einem Material bestehen. Hinzu kommt, daß die bekannten Korrekturverfahren in der Regel nur ein oder zwei verschiedene Artefakte kompensieren können.

Der Erfindung liegt die Aufgabe zugrunde, ein Verfahren und eine Vorrichtung zur Konturermittlung eines Objekts zu schaffen, die eine hohe Genauigkeit der Konturermittlung ermöglichen.

Aus den Literaturstellen -

D1:    MCCARTHY S ET AL: "Segmentation algorithm for objects with very low edge contrast" PROCEEDINGS OF THE SPIE - THE INTERNATIONAL SOCIETY FOR OPTICAL ENGINEERING SPIE-INT. SOC. OPT. ENG USA, Bd: 5608, Nr. 1, 2004, Seiten 162-168, XP002404854 ISSN: 0277-786X, und

D2:    ISAAC N BANKMAN ET AL: "Segmentation Algorithms for Detecting Micro- calcifications in Mammograms" IEE TRANSACTIONS ON INFORMATION TECHNOLOGY IN BIOMEDICINE, IEEE SEVICE CENTER, LOS ALAMATOS, CA, US, Bd. 1, Nr. 2, Juni 1997 (1997-06), XP011028275 ISSN: 1089- 7771,

sind Mammografie-Verfahren zur Konturermittlung eines Gewebebereichs zu entnehmen, bei denen ausgehend von einem Punkt größter Helligkeit Profillinien strahlenförmig ausgehen, um unter Berücksichtigung der diesen zugeordneten Rekonstruktionswerten die Kontur eines Gewebebereichs zu bestimmen.

Diese Aufgabe ist erfindungsgemäß bei einem Verfahren mit den Merkmalen des Anspruchs 1 und einer Vorrichtung mit den Merkmalen des Anspruchs 25 gelöst. Vorteilhafte Weiterbildungen der Erfindung sind Gegenstand der Unteransprüche.

Durch die Erfindung wird somit ein Verfahren zur Konturermittlung eines Objekts bei bildgebende Untersuchungsverfahren zur Verfügung gestellt, bei denen vom Prüfobjekt mehrere Projektionsbilder in verschiedenen Winkelstellungen aufgenommen werden und eine dreidimensionale Darstellung des Untersuchungsobjektes rekonstruiert wird. Dabei werden für die Darstellung des Untersuchungsobjekts Volumendaten gewonnen. Gemäß der Erfindung wird eine außerhalb und innerhalb des Untersuchungeobjekts liegende und durch die lokale Umgebung eines ersten Konturpunkts verlaufende Profillinie festgelegt und Stützpunkte werden auf dieser vorgegeben. Entlang der Profillinie für die Stützpunkte werden die zugehörigen Rekonstruktionswerte bestimmt. Aus dem Verlauf der Rekonstruktionswerte entlang und/oder benachbart der Profillinie in der Konturpunktumgebung wird ein lokaler Schwellwert der Rekonstruktionswerte bestimmt oder es werden Positionen für den lokalen Hintergrundgrauwert und Objektgrauwert bestimmt. Auf der Profillinie wird dann ein lokaler Konturpunkt bestimmt.

Gemäß einer Variante des erfindungsgemäßen Verfahrens wird für die Bestimmung der Lage eines Konturpunktes jeweils ein erster Konturpunkt des Untersuchungsobjekts festgelegt, durch den die Profillinie gelegt wird. Dies ist beispielsweise der Fall bei Anwendung der Konturextraktion, was unten noch näher beschrieben wird.

Es kann jedoch auch für die Bestimmung der Lage eines Konturpunktes die Profillinie in den Übergangsbereich von Objekt und Hintergrund gelegt werden, ohne erst einen ersten Konturpunkt zu bestimmen bzw. zu benutzen.

Bei der vorzugsweise angewendeten Konturextraktion wird für die Lagebestimmung der Kontur aus dem rekonstruierten Volumen ein Schwellwert der Rekonstruktionswerte festgelegt und die Lage der Konturpunkte bestimmt. Das Extraktionsverfahren umfaßt mehr im einzelnen, daß ein erster Schwellwert der Rekonstruktionswerte festgelegt wird, für die Bestimmung der Lage eines Konturpunktes jeweils ein erster Konturpunkt des Untersuchungsobjekts festgelegt wird, eine außerhalb und innerhalb des Untersuchungsobjekts liegende und durch den ersten Konturpunkt verlaufende Profillinie festgelegt und Stützpunkte auf dieser ermittelt werden. Entlang der Profillinie für die Stützpunkte werden die zugehörigen Rekonstruktionswerte z.B. durch Interpolation aus dem Volumendatensatz bestimmt. Aus dem Gradientenverlauf der Rekonstruktionswerte entlang und/oder benachbart der Profilline um den ersten Konturpunkt herum wird ein neuer lokaler Schwellwert bestimmt und auf der Profillinie wird der erste Konturpunkt zum Ort des lokalen Schwellwerts als zweiten Konturpunkt verschoben.

Das erfindungsgemäße Verfahren ist von der Ursache der Artefakte sowie von der absoluten Materialdichte und -homogenität unabhängig und ermöglicht daher eine genauere Konturermittlung als bei herkömmlichen Korrekturverfahren, die auf die Korrektur bestimmter Artefakte abgestellt sind.

Bei dem erfindungsgemäßen Extraktionsverfahren wird die Kontur vollständig erfaßt und es liegt eine korrekte Vernetzung der Konturpunkte vor. Das Verfahren kann auf die gesamte Objektkontur, aber auch auf Teilbereiche angewendet werden. Der Einfluß des Bedieners ist durch die weitgehend automatische Festlegung des lokalen Schwellwerts minimiert, der an die lokal eventuell unterschiedlichen Grauwertniveaus angepaßt ist und von der Wahl des ersten Schwellwerts unabhängig ist. Dadurch ist eine hohe Reproduzier- und Automatisierbarkeit des Extraktionsprozesses ermöglicht.

Das erfindungsgemäße Verfahren basiert auf Volumendaten. Die Lage der ersten Konturpunkte kann vorteilhaft mit einem Iso-Extraktionsverfahren, z.B. dem Marching-Cubes-Verfahren ermittelt werden, wodurch gleichzeitig die Vernetzung der Konturpunkte bestimmt werden kann. Alternativ können die ersten Konturpunkte über Kantenfindungsoperatoren oder Contour-Tracking-Algorithmen bestimmt werden. Möglich ist auch die Vorgabe von Konturpunkten, welche auf Flächen einer Vergleichsgeometrie (z.B. CAD oder einer anderen Geometrie) bzw. einer Regelgeometrie liegen, oder über die Definition von einzelnen Punkten (beispielsweise durch Koordinatenangabe).

Ergebnis der erfindungsgemäßen Methode ist die Lage der Konturpunkte (auch Punktewolke genannt). Werden die ersten Konturpunkte z.B. über eine Iso-Extraktion bestimmt, kann mit der vorgestellten Methode zusätzlich zu den Konturpunkten eine Vernetzung angegeben werden. Die Oberflächenkontur kann somit als Facettenmodell dargestellt werden. Für letztere werden Orientierungsinformationen (z.B. Flächenorientierung, Vernetzung bzw. Verbindung der Flächen) mit benötigt.

Für jeden Konturpunkt wird aus dessen Umgebung in der dreidimensionalen Objektdarstellung (z.B. CT-Volumen) ein lokaler Schwellwert bestimmt. Hierfür wird der Grauwertübergang bzw. -sprung über Profillinien analysiert und anhand der ermittelten Rekonstruktionswerte und deren Verlauf (Gradient) nahe dem betrachteten Konturpunkt eine Anpassung des Schwellwerts an die lokale Umgebung im CT-Volumen vorgenommen.

Die Profillinien zur Untersuchung der Abtastwerte (Grauwerte) in Konturnähe können senkrecht zur Objektkontur liegen, aber auch in einem spitzen Winkel, etwa bis 15° beispielsweise, geneigt sein. Vielfach werden sie im wesentlichen nahe der Normalenrichtung, auch hier beispielsweise bis 15°, verlaufen. Wesentlich ist, daß die Profillinien außerhalb und innerhalb des Objektes liegen, d.h. die Konturfläche durchstoßen. So kann beispielsweise auch zur Erzeugung einer Profillinie etwa eine Schnittlinie durch das Objekt gelegt werden und entlang dieser Schnittlinie der Grauwertgradient an der Objektkonturfläche untersucht werden. Eine Lagevariation führt zu keiner signifikanten Änderung des Ergebnisses, da das Meßvolumen so genau abgetastet wird und für jedes Geometriemerkmal des untersuchten Körpers mehrere zig Stützpunkte extrahiert werden. Der durch die lokalen Extraktionsverfahren verursachte Eigenrauschanteil wird herausgemittelt.

Es kann auch ein Startpunkt, beispielsweise auf der Mittenachse eines Zylinders, festgelegt und von diesem aus die Profillinie bis in den Zylinderkörper hinein gelegt werden.

Die auf der Profillinie gewählten Stützpunkte können in festen Abständen vorgegeben werden, z.B. alle 0,1 Voxel. Eine mögliche Alternative ist, als Stützpunkte die Schnittpunkte der Profillinie mit Gitterfläche (aufgespannt über 2x2 Voxelumgebung) im CT-Volumen zu definieren. Der Abstand der Stützpunkte muß so sein, daß der Verlauf der Rekonstruktionswerte ausreichend genau ermittelt werden kann. Die Grauwerte an den Stützpunkten ergeben sich aus interpolierten Werten von Volumendaten, beispielsweise CT-Volumen.

Erfolgt die Definition der ersten Konturpunkte über eine Iso-Extraktion, so muß zunächst ein Start-Schwellwert vorgegeben werden. Dieser sollte zwischen den Grauwerten von Material und Umgebung liegen. Wie noch gezeigt wird und bereits erwähnt wurde, wirkt sich der konkrete Wert des Startschwellwerts im wesentlichen nicht auf die Genauigkeit der erfindungsgemäßen Konturermittlung aus.

Bei der Iso-Extraktion gemäß dem Stand der Technik hingegen werden aufgrund verschiedener Grauwertniveaus im rekonstruierten Volumen, z.B. verursacht durch das Strahlaufhärttingsartefakt, eine Oberflächenkontur extrahiert, welche von der wahren Bauteilgeometrie lokal verschiedene Abweichungen aufweist. Dies ist dadurch begründet, daß anhand eines einzigen Schwellwerts die verschiedenen Grauwertniveaus imrekonstruierten Volumen nicht berücksichtigt werden können.

Die Definition des Grauwertverlaufs zur Ermittlung des lokalen Schwellwerts ist im wesentlichen auf die Ermittlung des steilsten Bereichs gerichtet, d.h. den Wendepunkt. Hierzu sind mehrere Vorgehensweisen möglich.

Bevorzugt ist es, für die Bestimmung des lokalen Schwellwerts den stärksten negativen Wert der Gradienten aus dem Grauwertverlauf (maximalen lokalen Grauwertgradienten) entlang der nach außen gerichteten Profillinie zu bestimmen und den zugehörigen Rekonstruktionswert als lokalen Schwellwert zu verwenden. Der erste Konturpunkt wird entlang der Profillinie zum Ort des steilsten negativen Grauwertgradienten verschoben und somit der zweite und genauere Konturpunkt ermittelt.

Gemäß einer anderen bevorzugten Alternative des erfindungsgemäßen Verfahrens wird für die Bestimmung des lokalen Schwellwerts ausgehend vom ersten Konturpunkt oder vom Ort des stärksten negativen Gradienten entlang der nach auswärts gerichteten Profillinie jeweils ein Objekt- und ein Hintergrundrekonstruktionswert (lokaler Werkstück- und Hintergrundgrauwert) bestimmt und diese Werte zur Bestimmung des lokalen Schwellwerts verwendet. Gemäß einer vorteilhaften Verfahrensvariante wird der Mittelwert als lokaler Schwellwert verwendet. Das heißt, der lokale Schwellwert wird über den lokalen Mittelwert von Objekt- und Hintergrundgrauwert ermittelt. Für die Festlegung des lokalen Grauwertes für Objekt und Hintergrund ist es möglich, einen vom Benutzer vorgegebenen Mindestgrauwertgradienten zu benutzen, z.B. -1000 1/vox. Dieser Mindestgrauwertgradient dient dazu, bei der Suche nach den beiden lokalen Grauwerten für Werkstück und Hintergrund den Einfluß von Rauschen und Strahlaufhärtung zu minimieren.

Statt der Verwendung der Rekonstruktionswerte von Objekt und Hintergrund entlang der Profillinie können zur Ermittlung der Konturpunktposition auch jeweils diesen Rekonstruktionswerten zugeordnete Ortspunkte verwendet werden.

Zur Verringerung der Unsicherheit bei der Festlegung des lokalen Schwellwerts, die beispielsweise durch Rauschen der Volumendaten verursacht wird, können benachbart der Profillinie weitere Profillinien abgetastet werden, aus diesen lokale Schwellwerte bestimmt werden und aus den lokalen Schwellwerten ein gemittelter Schwellwert bestimmt werden. Es können hierbei Profillinien verwendet werden, welche durch benachbarte Konturpunkte verlaufen, oder zusätzliche Profillinien z.B. kreisförmig um die betrachtete Profillinie gelegt werden, wobei die Anordnung der Profillinien über die Anzahl der Kreise $k_{(ges)}$,= 1, 2, 3, etc.), und das radiale Abstandsinkrement der Kreise (z.B. $r_k$ = 1,5 vox) sowie die Anzahl der Profillinien pro Kreis (z.B. $n_{Kreis1}$, = 8, $n_{Kreis2}$ = 16, $n_{Kreis3}$ = 24, etc.) vom Benutzer variiert werden können.

Auch ist es möglich, statistische Ausreißer bei Bestimmung des lokalen Schwellwerts über eine Toleranzbedingung zu erfassen und bei der Mittelwertberechnung unberücksichtigt zu lassen.

Das CT-Volumen bleibt bei dem erfindungsgemäßen Extraktionsprozeß unverändert. Es muß auch nicht vorkorrigiert werden. Aufgrunddessen kann die Rechenzeit minimiert werden.

Die erfindunsgemäße Methode der Konturermittlung ist gegenüber herkömmlichen Verfahren deutlich genauer. So wurde bei einer dünnwandigen Innenkontur eine Abweichung der Meßwerte von der wahren Objektgeometrie von ca. 0,5 bis 1,5 vox (Isoextraktion) auf weniger als 0,3 vox reduziert. Im konkreten Fall konnte die systematische Durchmesserabweichung an einer Hohlzylindergeometrie (rekonstruierte Auflösung: vox = 30 $\mu$m) von 15 bis 45 $\mu$m auf weniger als 9 $\mu$m reduziert werden, ein Düsenkörper (rekonstruierte Auflösung: vox = 8 $\mu$m) konnte auf 1 bis 4 $\mu$m genau erfaßt werden. Für meßtechnische Anwendungen, die Konturerfassung einer Bauteilgeometrie für Reverse-Engineering-Anwendungen (Rapid Prototyping und Simulation) sowie die Erfassung von medizinisch relevanten Informationen, etwa für die Prothetik, ist das erfindungsgemäße Verfahren daher sehr geeignet.

Das erfindungsgemäße Verfahren kann in verschiedenen Alternativen eingesetzt werden. In der Grundversion sozusagen wird nur die Feinjustierung der Konturpunkte durchgeführt, wobei von Rekonstruktionswerten in der lokalen Konturpunktumgebung des Untersuchungsobjekts ausgegangen wird. In einer anderen Ausführungsweise wird von den Extraktionsdaten ausgegangen, somit im Falle einer Iso-Extraktion von Isopunkten. Es kann aber auch eine Verknüpfung mit einer Extraktionsmethode angewendet werden und dann beispielsweise unter Verwendung der Iso-Schwellwerte die Isopunkte ermittelt werden. Andere Varianten umfassen die Rekonstruktion mit, d.h. Grauwertbestimmung. Das erfindungsgemäße Verfahren kann aber auch in das Meßverfahren mit integriert werden, d.h. in die Projektionsdatengewinnung, Bestimmung der Rekonstruktionswerte und das Extraktionsverfahren. Diese Flexibilität ist durch die Unabhängigkeit von der exakten Lage des in üblicher Weise ermittelten jeweiligen Konturpunkts gegeben, denn die Erfindung setzt nicht bei diesem Punkt, sondern in dessen lokaler Umgebung an und kann dann bereits den genaueren lokalen Konturpunkt bestimmen.

Durch die Erfindung ist auch eine Vorrichtung zur Konturermittlung eines Objekts bei bildgebenden Verfahren geschaffen worden, bei denen ein Volumenmodell des Untersuchungsobjekts mit Rekonstruktionswerten verwendet wird und die Lage der Konturpunkte bestimmt wird. Es ist eine Extraktionsvorrichtung vorgesehen, die Mittel umfaßt, die eine außerhalb und innerhalb des Untersuchungsobjekts liegende und durch die lokale Umgebung der Objektkontur verlaufende Profillinie festlegen und Stützpunkte auf dieser vorgeben. Weiter ist eine Einrichtung vorgesehen, die entlang der Profillinie für die Stützpunkte die zugehörigen Rekonstruktionswerte bestimmt und aus dem Verlauf der Rekonstruktionswerte entlang und/oder benachbart der Profillinie in der Konturpunktumgebung einen lokalen Schwellwert der Rekonstruktionswerte bestimmt oder Positionen für den lokalen Hintergrundgrauwert und Objektgrauwert bestimmt. Es ist eine Einrichtung vorgesehen, die auf der Profillinie einen lokalen Konturpunkt bestimmt.

Ein Ausführungsbeispiel der erfindungsgemäßen Vorrichtung umfaßt eine Einrichtung zur Extraktion der Lage der Kontur aus der dreidimensionalen Objektdarstellung, welche über einen Schwellwert festgelegt wird, und die Lage der Konturpunkte bestimmt. Die Extraktionseinrirhtung umfaßt Mittel, die einen ersten Schwellwert der Abtastwerte festlegen, Mittel für die Bestimmung der Lage eines Konturpunktes, die jeweils einen ersten Konturpunkt des Untersuchungsobjekts festlegen, sowie Mittel, die um den ersten Konturpunkt herum einen neuen lokalen Schwellwert der Rekonstruktionswerte bestimmen. Ferner ist eine Einrichtung vorgesehen, die auf der Profillinie den erstern Konturpunkt zu einem zweiten Konturpunkt am Ort des lokalen Schwellwerts verschiebt.

Die Erfindung wird im Folgenden weiter anhand von Ausführungbeispielen näher erläutert. In der Zeichnung zeigen:

Fig. 1    eine schematische Darstellung des Meßaufbaus bei der Mikrocomputertomographie,

Fig. 2    ein Grauwert-Profildiagramm, das den durch das soge- nannte Strahlaufhärtungsartefakt bedingten Verlauf der rekonstruierten Grauwerte durch eine dreidimen- sionale Rekonstruktion eines in Fig. 3 im Aufbau gezeigten Zylinders darstellt,

Fig. 3    in der mittleren Ansicht einen axialen Längsschnitt und darüber und darunter einen Schnitt im Bereich der dünneren bzw. dickeren Wandstärke des Zylinders von Fig. 2,

Fig. 4    eine Veranschaulichung der Konturpunktermittlung mit- tels des steilsten Grauwertgradienten,

Fig. 5    und 6 eine Veranschaulichung der Konturpunktermitt- lung unter Verwendung eines Mittelwerts aus Grauwert des Werkstücks und des Hintergrundes,

Fig. 7    eine Gegenüberstellung der Konturpunktermittlung nach dem Stand der Technik (Iso-Extraktion) und gemäß der Erfindung nach der Methode von Fig. 5 und 6,

Fig. 8    eine Gegenüberstellung von Messungen einer Hohlzylin- derbohrung nach dem Stand der Technik (Iso-Extraktion) und gemäß der Erfindung nach der Methode von Fig. 5 und 6 und

Fig. 9    eine Darstellung der systematischen Abweichung und Schwellwertsensitivität mit Gegenüberstellung von Messungen eines Spritzlochs eines Düsenkörpers nach dem Stand der Technik (Iso-Extraktion) und gemäß der Erfindung nach der Methode von Fig. 5 und 6.

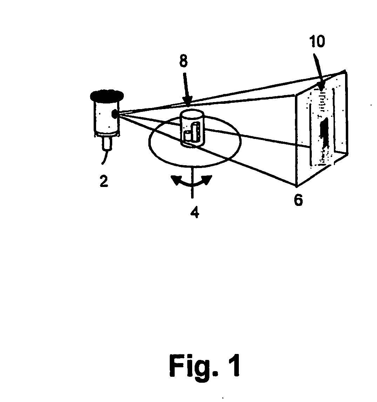

Fig. 1 zeigt den Meßaufbau einer Vorrichtung zur Durchführung des erfindungsgemäßen Verfahrens, hier realisiert als Mikrocomputertomographie. Eine Röntgenquelle 2 mit einer Röhrenspannung bis zu 225 kV, maximaler Röhrenleistung von 320 W und einer minimalen Fokusgröße von 3 bis 5 µm wurde als Strahlenquelle eingesetzt. In den Projektionsstrahl eingebracht befand sich das jeweils zu untersuchende Objekt 8, das auf einem Manipulator 4 angeordnet war. Der Manipulator 4 hatte die Aufgabe, das Objekt 8 während der Messung zu drehen, zu verschieben oder zu kippen, so daß das Objekt 8 durch eine Vielzahl von aufgenommenen Winkelstellungen praktisch vollständig in seiner 3D-Struktur erfaßt werden konnte. Die Projektionsstrahlen wurden von einem Detektor 6 (Flat-Panel-Detektor) aufgenommen, der die Röntgenstrahlung über den Röntgenkonverter in zunächst sichtbares Licht und anschließend in ein Signal umwandelte. Derartige Detektoren bestehen typischwerweise aus 512 x 512 bis 2048 x 2048 Detektorpixelelementen (Pixelgröße 0,200 bis 0,400 mm). Der Detektor gibt ein Projektionsbild 10 zur Weiterverarbeitung aus. Statt des beschriebenen Aufbaus können auch andere Meßaufbauten verwendet werden, beispielsweise sogenannte Röntgenbildverstärker mit CCD-Chip, Dünnschicht-Transistoren mit amorphem Selen oder einer kristallinen Cadmium-Zink-Tellurid-Schicht oder Zeilendetektoren. Für große Bauteile (z.B. Motorkomponenten) werden Makro-CT-Anlagen verwendet, die über eine leistungsstärkere Röntgenröhre mit einer Röntgenenergie von z.B. 450 kV arbeiten und einen Flächen- bzw. Zeilendetektor verfügen.

Zur Berechnung des CT-Volumens ist die Verteilung der linearen Schwächungskoeffizienten $\mu(x, y, z)$ zu berechnen. Hierbei muß folgende Gleichung mit einem geeigneten Rekonstruktionsverfahren gelöst werden:

$$S_{p,q,\theta}^{m} = S_{L,m}' \cdot e^{-\int \mu(x,y,z)ds} \qquad\qquad (1)$$

Für die Rekonstruktion des CT-Volumens aus den Projektionsdaten gibt es algebraische und analytische Methoden. Als Standard für die Rekonstruktion der Kegelstrahl-CT hat sich die Methode der gefilterten Rückprojektion etabliert, welche zu den analytischen Methoden zählt, siehe z.B. Feldkamp, L.A.; Davis, L.c.; Kress, J.W. "Practical cone-beam algorithm", J. Opt. Soc. Amer., Vol. 1 (56), S. 612 bis 619, 1984.

Der rekonstruierte CT-Volumendatensatz wird mit einer Matrix von Volumenelementen, den Voxeln, visualisiert. Ihre Lage ist durch Spalte, Reihe und Schicht definiert. Jedes Voxel repräsentiert den Wert des örtlichen linearen Schwächungskoeffizienten $\mu$ (x, y, z), welcher als Rekonstruktionswert bzw. Grauwert ausgedrückt wird. Zur Visualisierung werden den Voxeln in Abhängigkeit ihres Rekonstruktionswertes Grautöne zugewiesen. Je höher der Rekonstruktionswert ist, desto heller wird das betreffende Voxel dargestellt.

Statt oder zusätzlich einer Visualisierung können die Voxel auch direkt weiterverarbeitet werden. Es kann statt einer 3D-Matrix auch ein Stapel von Schichtbildern benutzt werden. Schließlich ist auch die Auswertung von 2D-Bildern denkbar.

Bei der nachfolgenden Konturextraktion wurde das CT-Volumenmodell in ein Flächenmodell überführt. Dieses beschreibt mit einer Vielzahl von Stützpunkten die Kontur des Werkstücks. Es wurde die übliche Methode der Marching Cubes mit Ansatz eines globalen Schwellwerts $G_{iso}$ bis zur Ermittlung der Isopunkte auf den Voxel-Würfelkanten angewendet, wobei Informationen über die Oberflächenvernetzung und Startwerte für die Berechnung der Konturlage erhalten wurden. Anschließend wurde gemäß der Erfindung der Schwellwert für jeden Konturpunkt an dessen lokale Umgebung im CT-Volumen angepaßt. Im konkreten Fall wurden Profillinien benutzt, die senkrecht zur Objektkontur lagen. Diese Bedingung ist jedoch nicht zwingend, die Profillinien müssen für die Ermittlung des lokalen Schwellwerts lediglich außerhalb und innerhalb des untersuchten Objekts verlaufen.

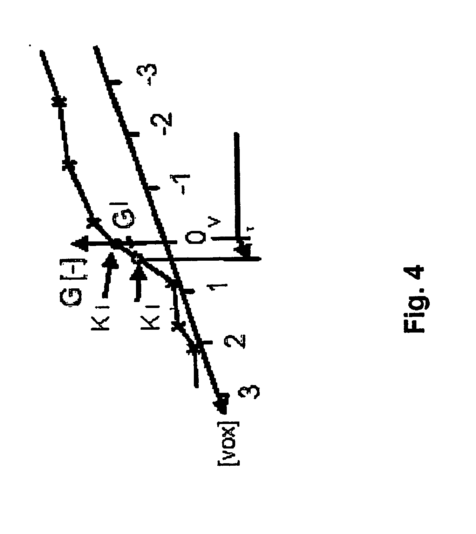

Als erstes wird die Methode der Konturpunktermittlung mittels der stärksten Grauwertgradienten beschrieben. Für jeden Isopunkt $K_1$, der der erste ermittelte Konturpunkt ist, wurden die Normalenrichtungen der beiden benachbarten Voxelwerte bestimmt, wobei in Abhängigkeit von der Entfernung zum Isopunkt interpoliert wurde, und so die nach außen gerichtete zu dem Isopunkt $K_1$ gehörige Einheitsnormale bestimmt wurde. Anschließend wurde der Grauwertverlauf entlang der in Richtung der Normalen verlaufenden Profillinie ermittelt: Dazu wurden die Grauwerte der Schnittpunkte der Profillinien bzw. Normalen durch die Gitterflächen des CT-Volumens bestimmt und die zugehörigen Grauwerte mit den vier benachbarten Voxelwerten interpoliert. Die Profillinie wurde dann in der lokalen Umgebung des Isopunkts $K_1$ (z.B. $\pm$ 5 vox) betrachtet, auf den Abschnitt mit dem maximalen negativen Grauwertgradienten G hin untersucht und der zugehörige Grauwert $G_0$ wurde ermittelt. Zusätzlich wurden noch in Umgebungsnormalen auf deren lokale maximale negative Grauwertgradienten G und die zugehörigen Grauwerte $G_o$ hin untersucht. Nach der Auswertung all dieser Profillinienverläufe wurde aus den bestimmten Grauwerten am steilsten Ort der lokale Schwellwert $G_1$ durch Mittelwertbildung bestimmt. Anschließend wurde der Schnittpunkt des lokalen Schwellwerts $G_1$ mit der Profillinie, welche durch den Isopunkt verläuft, ermittelt. Der Konturpunkt wurde dann von dem Isopunkt $K_1$ aus entlang der Isopunktnormalen zu dem Punkt mit dem lokalen Schwellwert hin um den Abstand v verschoben und so der neue lokale Konturpunkt $K_1$ bestimmt. Dies ist in Fig. 4 veranschaulicht.

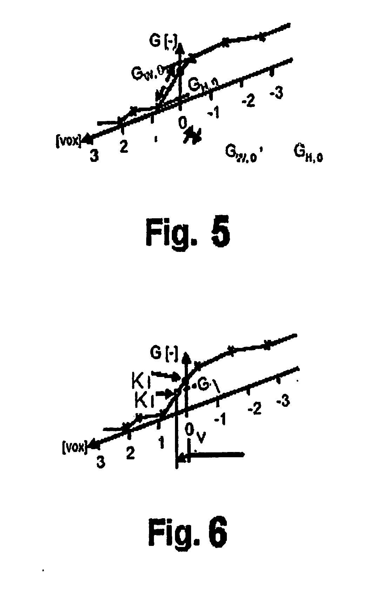

In Fig. 5 und 6 ist die Methode der Konturpunktermittlung unter Verwendung eines Mittelwerts aus Grauwerten des Werkstücks und des Hintergrundes erläutert. Analog zu der obenstehend beschriebenen Methode der Konturpunktermittlung mittels der stärksten Profilliniengradienten wurden wiederum zunächst die Isopunktnormale und die zugehörige Profillinie ermittelt. Entlang der Profillinie wurde - ausgehend von dem Abschnitt mit dem steilsten Grauwertgradienten - der lokale Werkstück- und Hintergrundgrauwert GW, 0 bzw. GH, 0 ermittelt. Bei der Bestimmung der beiden Werte wurde ein Abbruchkriterium verwendet, hier ein Mindestgrauwertgradient, welcher vom Benutzer vorgegeben werden kann. Dieser Mindestgrauwertgradient dient dazu, bei der Suche nach den beiden lokalen Grauwertschwellwerten für Werkstück und Hintergrund den Einfluß von Rauschen und Strahlaufhärtung zu minimieren. Bei den Fig. 5 und 6 zugrundeliegenden Versuchen wurde ein Gradient von -1000 1/vox gewählt. Der lokale Schwellwert $G_1$ wurde aus dem Mittelwert von lokalen Material- und Hintergrundgrauwerten berechnet. Anschließend wurden auch Umgebungsprofillinien auf die lokalen Grauwerte von Werkstück und Hintergrund ausgewertet. Aus den bestimmten Werten für die Isopunkt- und Umgebungsnormalen wurde der lokale Schwellwert $G_1$ bestimmt. Aus dem Schnittpunkt des lokalen Schwellwerts $G_1$ mit der Grauwertprofillinie entlang der Isopunktnormale wurde der Verschiebungsvektorbetrag v des Isopunktes $K_1$ berechnet. Der neue Konturpunkt $K_1$ wird durch Verschieben des Isopunktes $K_1$ um den Betrag v in bzw. gegen die Isopunktnormalenrichtung erzeugt. Es hat sich gezeigt, daß diese Methode nur ein geringes Eigenrauschen aufweist.

Die zusätzliche Auswertung umgebender Profillinien wie beschrieben ermöglicht eine verbesserte Auswertesicherheit. Die Umgebungsprofillinien können beispielsweise durch benachbarte Isopunkte verlaufen oder auf Kreise gelegt werden und können und jeweils eine Umgebungsnormale repräsentieren. Der lokale Schwellwert wird als Mittelwert der Grauwerte der Isopunkt- und Umgebungsnormalen bestimmt.

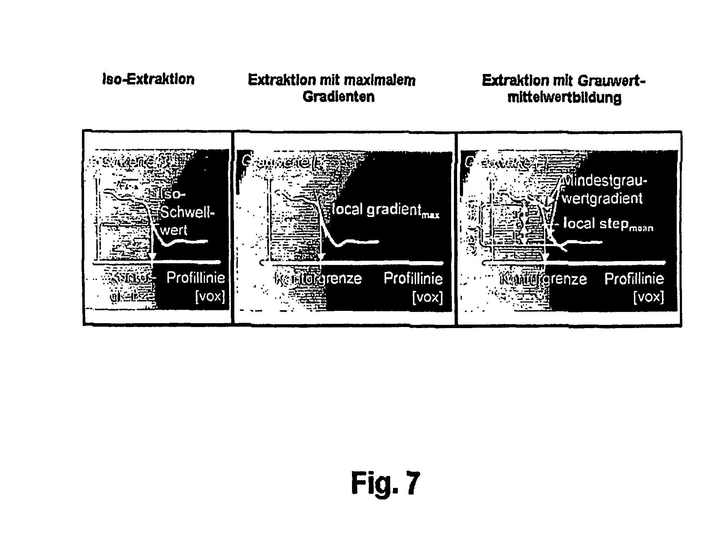

In Fig. 7 sind die beiden erfindungsgemäßen Verfahren im Vergleich zur Konturermittlung mittels Iso-Extraktion einander gegenübergestellt, um die Unterschiede zu verdeutlichen. Bei der ganz links dargestellten Iso-Extraktion werden die Konturpunkte anhand des vorgegebenen Schwellwerts $G_1$ und den benachbarten Voxelgrauwerten durch Interpolation ermittelt. Hier setzt dann die erfindungsgemäße Methode an. In der Mitte ist die Extraktion mit maximalem lokalem Gradienten (local gradient$_{max}$) gezeigt, veranschaulicht durch die Tangentendarstellung. Der Ansatz mit Werkstückgrauwert und Umgebungsgrauwert (local step) sowie Vorgabe eines Mindestgrauwertgradienten, der zum mittleren lokalen Schwellwert $G_1$ (local step$_{mean}$) führt, ist rechts in Fig. 7 gezeigt.

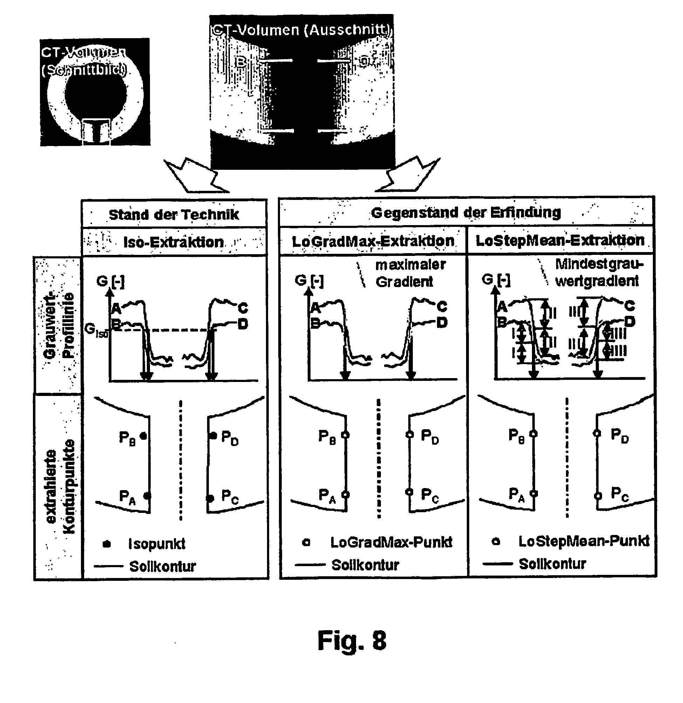

Im folgenden wird unter Bezugnahme auf Fig. 8 die erfindungsgemäße Konturpunktermittlung anhand von Beispielen und im Vergleich zu bekannten Verfahren weiter veranschaulicht. Der untersuchte Körper ist ein Hohlzylinder mit einer radial durch seine Wand verlaufenden Bohrung, deren wahre Geometrie über eine Kalibriermessung bekannt ist und oben links im Schnitt gezeigt ist. Oben rechts ist ein vergrößerter Ausschnitt dargestellt, aus dem die Lage der Punkte an den Grauwertübergängen A (außen) und B (innen) sowie C (außen) und D (innen) hervorgeht, wobei die zugehörigen Konturpunkte $P_A$, $P_B$, $P_C$ und $P_D$ betrachtet werden. Das CT-Volumen ist von einem Strahlaufhärtungsartefakt überlagert, dessen Auswirkungen Fig. 8 veranschaulicht. Die Grauwertübergänge B und D in der Nähe der Innenkontur des Hohlzylinders sind vom Strahlaufhärtungsartefakt stark beeinflußt. Die Grauwertniveaus von B und D liegen unterhalb der - von dem Strahlaufhärtungsartefakt weitgehend unbeeinflußten - Bereiche A und C. Die bei der Iso-Extraktion für die Grauwertübergänge B und D berechneten Konturpunkte PB und PD weisen eine große systematische Abweichung zur wahren Bauteilgeometrie auf. Mit den beiden erfindungsgemäßen lokalen Schwellwertverfahren LoGradMax (Extraktion mit maximalem Gradienten) und LoStepMean (Extraktion mit Mittelwertbildung von lokalem Objekt- und Hintergrundgrauwert) können die vom Strahlaufhärtungsartefakt bedingten lokal unterschiedlichen Grauwertniveaus größtenteils ausgeglichen werden. Die lokal angepaßte Extraktion verursacht eine deutlich geringere systematische Abweichung als die Iso-Extraktion (Stand der Technik).

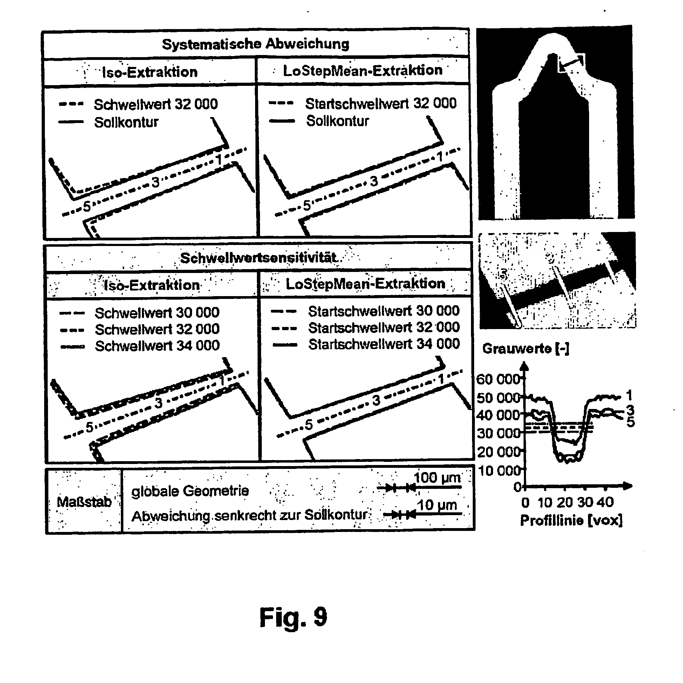

Fig. 9 liefert ein Beispiel für die hohe Meßgenauigkeit, die mit dem erfindungsgemäßen Verfahren erreicht werden kann, und zwar auch in dem Fall, in dem die Grauwertniveaus des Probenkörpers, eines kalibrierten Düsenkörpers, nicht homogen sind. Wie die Schnittdarstellung rechts oben links und das Grauwertprofilliniendiagramm rechts unten zeigen, fällt das Grauwertniveau vom Spritzlochaustritt zum Spritzlocheintritt ab. Bei der Iso-Extraktion wird das nicht berücksichtigt und dies führt zu Meßungenauigkeiten von ca. 10 $\mu$m. Während der Spritzlochdurchmesser am Spritzlocheinritt (Punkt 5) zu groß bestimmt wird, wird er am Spritzlochaustritt (Punkt 1) zu klein bestimmt, so daß durch die Messung eine Konusform des Spritzlochs ermittelt wird, die von der tatsächlichen Lochkontur abweicht. Das erfindungsgemäße lokale Schwellwertverfahren (Extraktion mit Mittelwertbildung der lokalen Grauwerte) paßt sich an die unterschiedlichen Grauwertniveaus an und ermöglicht eine Konturerfassung mit einer systematischen Abweichung von ca. 1 bis 4 $\mu$m bei einer Voxelkantenlänge von etwa 8 $\mu$m.

Obenstehend ist die Erfindung am Beispiel der Röntgentomographie, der Untersuchung von Werkstücken sowie der Methoden der Extraktion mit maximalem Gradienten bzw. mit Mittelwertbildung von lokalen Hintergrund- und Objektgrauwerten erläutert worden. Selbstverständlich kann das erfindungsgemäße Konturermittlungsverfahren auch zu anderen Untersuchungszwecken, beispielsweise bei Riß- und Materialuntersuchungen, im Bereich der Medizin und auch mit anderen Methoden und Varianten der Bestimmung des lokalen Konturpunkts angewendet werden.

**Patentansprüche**

1. Verfahren zur Konturfeinermittlung eines industriellen Objekts bei bildgebenden Untersuchungsverfahren, bei denen ein Volumenmodell des objekts mit Rekonstruktionswerten verwendet wird und die Lage der Konturpunkte bestimmt wird, wobei das Objekt durch eine Vielzahl von aufgenommenen Winkelstel- lungen in einem für die Konturfeinermittlung bestimmten Bereich in sei- ner 3-D-Struktur erfasst wird,
**dadurch gekennzeichnet, dass**
eine außerhalb und innerhalb des Untersuchungsobjekts liegende und durch die lokale Umgebung der Objektkontur verlaufende Profillinie festgelegt und Stützpunkte auf dieser vorgegeben werden,
entlang der Profillinie für die Stützpunkte die zugehörigen Rekonstruktionswerte bestimmt werden,
aus dem Verlauf der Rekonstruktionswerte entlang und/oder benachbart der Profillinie in der Konturpunktumgebung zur Konturfeinermittlung der steilste Bereich, insbesonder Wendepunkt, Maximum des lokalen Rekonstruktionswertegradienten, oder ein lokaler Schwellwert ($G_1$) der Rekonstruktionswerte bestimmt wird oder Positionen für den lokalen Hintergrundgrauwert ($G_H$) und Objektgrauwert ($G_O$) bestimmt werden und
auf der Profillinie ein lokaler Konturpunkt ($K_1$) bestimmt wird.

**2.** Verfahren nach Anspruch 1,
**dadurch gekennzeichnet,**
**dass** der erste Konturpunkt entlang der Profillinie zum Ort des steilsten negativen Grauwertgradienten als den Rekonstruktionswertgradienten zur Ermittlung eines zweiten genauen Konturpunkts verschoben wird.

**3.** Verfahren nach Anspruch 1 oder 2,
**dadurch gekennzeichnet,**
**dass** zur Bestimmung des lokalen Schwellwerts ausgehend vom ersten Konturpunkt oder vom Ort des stärksten negativen Gradienten entlang der nach auswärtsgerichteten Profillinie jeweils ein Objekt- und ein Hintergrundrekonstruktionswert bestimmt werden und diese Werte zur Bestimmung des lokalen Schwellwerts verwendet werden.

**4.** Verfahren nach zumindest einem der vorhergehenden Ansprüche,
**dadurch gekennzeichnet,**
**dass** mehrere benachbart der Profillinie verlaufende weitere Profillinien abgetastet werden, dass aus den Profillinien lokale Schwellwerte bestimmt werden und dass aus den so bestimmten Schwellwerten ein gemittelter Schwellwert bestimmt wird.

**5.** Verfahren nach zumindest einem der vorhergehenden Ansprüche,
**dadurch gekennzeichnet,**
**dass** statistische Ausreißer bei Bestimmung des lokalen Schwellwerts über eine Toleranzbedingung erfasst und diese bei der Mittelwertbildung unberücksichtigt bleiben.

**6.** Verfahren nach zumindest einem der vorhergehenden Ansprüche,
**dadurch gekennzeichnet,**
**dass** die Profillinie senkrecht zur Objektkontur oder unter einem spitzen Winkel geneigt zu dieser verläuft.

**7.** Verfahren nach zumindest einem der vorhergehenden Ansprüche,
**dadurch gekennzeichnet,**
**dass** für die Bestimmung der Lage eines Konturpunktes jeweils ein erster Konturpunkt des Untersuchungsobjektes festgelegt wird, durch den die Profillinie gelegt wird.

**8.** Verfahren nach zumindest einem der vorhergehenden Ansprüche,
**dadurch gekennzeichnet,**
**dass** für die Bestimmung der Lage eines Konturpunktes die Profillinie in den Übergangsbereich von Objekt und Hintergrund gelegt wird.

**9.** Verfahren nach zumindest einem der vorhergehenden Ansprüche,
**dadurch gekennzeichnet,**
**dass** für die Lagebestimmung der Kontur der dreidimensionalen Objektdarstellung ein Schwellwert der Rekonstruktionswerte (G) festgelegt wird und aus diesem der erste Konturpunkt bestimmt wird.

**10.** Verfahren nach zumindest einem der vorhergehenden Ansprüche,
**dadurch gekennzeichnet,**
**dass** über mehrere Projektionen eine dreidimensionale Darstellung des Untersuchungsobjekts rekonstruiert wird, wobei für die Darstellung des Untersuchungsobjekts Volumendaten gewonnen werden.

**11.** Verfahren nach zumindest einem der vorhergehenden Ansprüche,
**dadurch gekennzeichnet,**
**dass** den Rekonstruktionswerten Grauwerte (G) zugeordnet werden.

**12.** Verfahren nach zumindest einem der vorhergehenden Ansprüche,
**dadurch gekennzeichnet,**
**dass** als Profillinie eine Normale oder davon um bis zu etwa 15°, vorzugsweise bis zu 10°, abweichende Gerade verwendet wird.

**13.** Verfahren nach zumindest einem der vorhergehenden Ansprüche,
**dadurch gekennzeichnet,**
**dass** als erster Konturpunkt ($K_1$) ein durch Konturextraktion, vorzugsweise Isoflächenextraktion, bestimmter Punkt verwendet wird.

**14.** Verfahren nach zumindest einem der vorhergehenden Ansprüche,
**dadurch gekennzeichnet,**
**dass** der erste Konturpunkt mittels Koordinaten festgelegt wird.

**15.** Verfahren nach zumindest einem der vorhergehenden Ansprüche,
**dadurch gekennzeichnet,**
**dass** die für die Bestimmung des entlang der Profillinie bestimmten Verlaufs der Rekonstruktionswerte benötigten Grauwerte aus Nachbarvoxeln interpoliert werden

**16.** Verfahren nach zumindest einem der vorhergehenden Ansprüche,
**dadurch gekennzeichnet,**
**dass** für die Bestimmung des lokalen Schwellwertes ($K_1$) der stärkste negative Gradient auf der nach außen gerichteten Profillinie bestimmt wird und der zugehörige Rekonstruktionswert als lokaler Schwellwert verwendet wird.

**17.** Verfahren nach zumindest einem der vorhergehenden Ansprüche,
**dadurch gekennzeichnet,**
**dass** für die Bestimmung des lokalen Schwellwerts ausgehend von einem vorgegebenen Startschwellwert oder ausgehend von dem stärksten negativen Gradienten entlang der nach außen gerichteten Profillinie zunächst entlang derselben jeweils ein Objekts- und ein Hintergrundrekonstruktionswert ($G_W$, $G_H$) bestimmt wird und diese als Grenzwerte zur Bestimmung des lokalen Schwellwertes ($G_1$) verwendet werden.

**18.** Verfahren nach zumindest einem der vorhergehenden Ansprüche,
**dadurch gekennzeichnet,**
**dass** ein Mittelwert aus dem lokalen Hintergrundwert ($G_H$) und Objektgrauwert ($G_W$) als lokaler Schwellwert ($G_1$) verwendet wird.

**19.** Verfahren nach zumindest einem der vorhergehenden Ansprüche,
**dadurch gekennzeichnet,**
**dass** für die Bestimmung des lokalen Schwellwerts ausgehend von einem vorgegebenen Startschwellwert oder ausgehend von dem stärksten negativen Wert der Gradienten entlang der nach außen gerichteten Profillinie zunächst Entlang derselben jeweils ein Objekt- und ein Hintergrundrekonstruktionswert ($G_W$, $G_H$) bestimmt wird und diesem lokalen Objekt- und Hintergrundrekonstruktionswert auf der Profillinie zugeordnete Ortspunkte zur Bestimmung der Position des Konturpunktes verwendet werden.

**20.** Verfahren nach zumindest einem der vorhergehenden Ansprüche,
**dadurch gekennzeichnet,**
**dass** benachbart der Profillinie weitere Profillinien abgetastet werden, aus diesen lokale Schwellwerte bestimmt werden und aus den lokalen Schwellwerten ein gemittelter Schwellwert bestimmt wird.

**21.** Computer programmprodukt welches, wenn auf einen computer ausgeführt, die Umsetzung eines Verfahrens nach einem der Ansprüche 1 bis 20 be wirkt.

**22.** Anwendung des Verfahrens nach einem der Ansprüche 1 bis 20 bei der Computer- und Magnetresonanztomographie.

**23.** Anwendung des Verfahrens nach einem der Ansprüche 1 bis 20 bei der 3D-Ultraschall-Messung.

**24.** Anwendung des Verfahrens nach einem der Ansprüche 1 bis 20 bei der Messtechnik.

**25.** Vorrichtung zur Konturfeinermittlung eines industriellen Objekts bei bildgebenden Untersuchungsverfahren, bei denen ein Volumenmodell des Objekts mit Rekonstruktionswerten verwendet wird und die Lage der Konturpunkte bestimmt wird wobei die Vorrichtung eine Strehlenquelle (2), einen Strahlen der Strahlenquelle detektieren- den Detektor (6) und einen zwischen diese angeordneten Manipulator (4) aufweist, mittels des- sen das Objekt (8) dreh-, verschieb- und/oder kippbar ist, um in einem für die Konturfe mittlung bestimmten Bereich eine 3-D-Struktur aufzunehmen, insbesondere zur Verwendung bei einem Verfahren nach einem der Ansprüche 1 bis 24,
**dadurch gekennzeichnet, dass**

eine Extraktionsvorrichtung vorgesehen ist, die Mittel umfasst, die eine außerhalb und innerhalb des Untersuchungsobjekts liegende und durch die lokale Umgebung der Objektkontur verlaufende Profillinie festlegen und Stützpunkte auf dieser vorgeben,

eine Einrichtung vorgesehen ist, die entlang der Profillinie für die Stützpunkte die zugehörigen Rekonstruktionswerte bestimmt und aus dem Verlauf der Rekonstruktionswerte entlang und/oder benachbart der Profillinie in der Konturpunktumgebung zur Konturfeinermittlung den steilsten Bereich, insbesondere Wendepunkt, Maximum des lokalen Rekonstruktionswertegradienten, oder einen lokalen Schwellwert ($G_1$) der Rekonstruktionswerte bestimmt oder Positionen für den lokalen Hintergrundgrauwert und Objektgrauwert bestimmt, und eine Einrichtung vorgesehen ist, die auf der Profillinie einen lokalen Konturpunkt ($K_1$) bestimmt,

26. Vorrichtung nach Anspruch 25,
**dadurch gekennzeichnet, dass**
eine Einrichtung (2, 4, 6) zur Abtastung von Projektionsdaten eines Untersuchungsobjekts (8) vorgesehen ist,
eine Einrichtung zur Rekonstruktion einer dreidimensionalen Darstellung des Untersuchungsobjekts aus den Abtastwerten vorgesehen ist, die für die Darstellung des Untersuchungsobjekts Volumendaten gewinnt,
eine Einrichtung zur Extraktion der Lage der Kontur aus der dreidimensionalen Objektdarstellung vorgesehen ist, welche über einen Schwellwert der Rekonstruktionswerte festgelegt wird, und die Lage der Konturpunkte bestimmt,
die Extraktionseinrichtung Mittel umfasst, die einen ersten Schwellwert der Abtastwerte ($G_i$) festlegen,
die Extraktionseinrichtung Mittel für die Bestimmung der Lage eines Konturpunktes umfasst, die jeweils einen ersten Konturpunkt ($K_i$) des Untersuchungsobjekts festlegen, und Mittel umfasst, die aus dem Verlauf der Rekonstruktionswerte um den ersten Konturpunkt ($K_i$) herum einen neuen lokalen Schwellwert ($G_1$) der Rekonstruktionswerte bestimmen, und
eine Einrichtung vorgesehen ist, die auf der Profillinie den ersten Konturpunkt zu einem zweiten Konturpunkt ($K_1$) am Ort des lokalen Schwellwerts verschiebt.

**Claims**

1. Method for fine determination of the contours of an industrial object in imaging examination methods in which a volume model of the object with reconstruction values is used and the positions of the contour points are determined, the object being recorded in its 3-D structure by a plurality of recorded angle settings in an area intended for fine determination of contours,
**wherein**
a profile line located outside and inside the examination object and passing through the local environment of the object contour is stipulated and support points are given thereon,
the associated reconstruction values are determined along the profile line for the support points,
the steepest area, in particular the turning point, the maximum of the local reconstruction value gradient or a local threshold value ($G_1$) of the reconstruction values is determined from the course of the reconstruction values along and/or adjacent to the profile line in the contour point vicinity for fine determination of contours, or positions for the local background gray value ($G_H$) and object gray value ($G_O$) are determined and
a local contour point ($K_1$) is determined on the profile line.

2. Method according to Claim 1,
**wherein**
the first contour point is moved along the profile line to the location of the steepest negative gray value gradient as the reconstruction value gradient for determination of a second precise contour point.

3. Method according to Claim 1 or 2,
**wherein**
for determination of the local threshold value, one object and one background reconstruction value each are determined along the outward-oriented profile line, starting from the first contour point or from the location of the strongest negative gradient, and these values are used for determination of the local threshold value.

4. Method according to at least one of the preceding claims,
**wherein**
several further profile lines running adjacent to the profile line are sampled, local threshold values are determined from the profile lines and a mean threshold value is determined from the threshold values thus determined.

**5.** Method according to at least one of the preceding claims,
**wherein**
statististical outliers during determination of the local threshold value are recorded using a tolerance condition and are ignored when the mean value is obtained.

**6.** Method according to at least one of the preceding claims,
**wherein**
the profile line runs at right angles to the object contour or inclined at an acute angle thereto.

**7.** Method according to at least one of the preceding claims,
**wherein**
for determination of the position of a contour point a first contour point of the examined object is stipulated and through which the profile line is placed.

**8.** Method according to at least one of the preceding claims,
**wherein**
for determination of the position of a contour point the profile line is placed into the transitional area of object and background.

**9.** Method according to at least one of the preceding claims,
**wherein**
for determination of the position of the contour of the three-dimensional object image a threshold value of the reconstruction values (G) is stipulated, from which threshold value the first contour point is determined.

**10.** Method according to at least one of the preceding claims,
**wherein**
a three-dimensional image of the examined object is reconstructed using several projections, volume data being obtained for imaging the examined object.

**11.** Method according to at least one of the preceding claims,
**wherein**
gray values (G) are assigned to the reconstruction values.

**12.** Method according to at least one of the preceding claims,
**wherein**
a perpendicular line or a straight line diverging therefrom by about 15°, preferably up to 10°, is used as the profile line.

**13.** Method according to at least one of the preceding claims,
**wherein**
a point determined by contour extraction, preferably iso-surface extraction, is used as the first contour point ($K_1$).

**14.** Method according to at least one of the preceding claims,
**wherein**
the first contour point is stipulated by means of coordinates.

**15.** Method according to at least one of the preceding claims,
**wherein**
the gray values required for the determination of the course of the reconstruction values determined along the profile line are interpolated from adjacent voxels.

**16.** Method according to at least one of the preceding claims,
**wherein**
for determination of the local threshold value ($K_1$) the strongest negative gradient along the outward-aligned profile line is determined and the associated reconstruction value is used as the local threshold value.

**17.** Method according to at least one of the preceding claims,
**wherein**
for determination of the local threshold value, starting from a given starting threshold value or starting from the strongest negative gradient along the outward-aligned profile line, along the latter first one object and one background reconstruction value ($G_W$, $G_H$) each are determined and used as limit values for determination of the local threshold value ($G_1$).

18. Method according to at least one of the preceding claims,
**wherein**
a mean value from the local background value ($G_H$) and object gray value ($G_W$) is used as the local threshold value ($G_1$).

19. Method according to at least one of the preceding claims,
**wherein**
for determination of the local threshold value, starting from a given starting threshold value or starting from the strongest negative value of the gradient along the outward-aligned profile line, along the latter first one object and one background reconstruction value ($G_W$, $G_H$) each are determined and local points assigned to these local object and background reconstruction values on the profile line are used for determination of the position of the contour point.

20. Method according to at least one of the preceding claims,
**wherein**
adjacent to the profile line, further profile lines are sampled from which local threshold values are determined, and a mean threshold value is determined from the local threshold values.

21. Computer program product, which, when executed on a computer, effects the implementation of a method according to one of Claims 1 to 20.

22. Application of the method according to one of Claims 1 to 20 for computer and magnetic resonance tomography.

23. Application of the method according to one of Claims 1 to 20 for 3D ultrasonic measurement.

24. Application of the method according to one of Claims 1 to 20 for metrology.

25. Device for fine determination of the contours of an industrial object in imaging examination methods, in which a volume model of the object with reconstruction values is used and the position of the contour points is determined, the device having a radiation source (2), a detector (6) detecting the beams of the radiation source and a manipulator (4) arranged between them and by means of which the object (8) can be rotated, displaced and/or tilted in order to record a 3-D structure in an area intended for fine determination of contours, in particular for use in a method according to one of Claims 1 to 24,
**wherein**
an extraction device is provided that comprises means stipulating a profile line located outside and inside the examination object and passing through the local environment of the object contour and giving support points thereon, a device is provided which determines the associated reconstruction values for the support points along the profile line and determines the steepest area, in particular the turning point, the maximum of the local reconstruction value gradient or a local threshold value ($G_1$) of the reconstruction values from the course of the reconstruction values along and/or adjacent to the profile line in the contour point vicinity for fine contour determination, or determines positions for the local background gray value and object gray value, and a device is provided that determines a local contour point ($K_1$) on the profile line.

26. Device according to Claim 25,
**wherein**
a device (2, 4, 6) is provided for sampling of projection data of an examined object (8), a device is provided for reconstruction of a three-dimensional image of the examined object from the sampled values and obtains volume data for imaging of the examined object, a device is provided for extraction of the position of the contour from the three-dimensional object image, which is stipulated by a threshold value of the reconstruction values and determines the position of the contour points, the extraction device comprises means stipulating a first threshold value of the sampled values ($G_1$), the extraction device comprises means for determination of the position of a contour point which stipulate a first contour point ($K_1$) of the examined object, and means which determine from the course of the reconstruction values about the first contour point ($K_1$) a new local threshold value ($G_1$) of the reconstruction values, and a device is provided which moves the first contour point on the profile line to a second contour point ($K_1$) at the

location of the local threshold value.

## Revendications

1. Procédé pour déterminer précisément le contour d'un objet industriel dans des méthodes d'analyse par imagerie, dans lequel un modèle en volume de l'objet est utilisé avec des valeurs de restitution et dans lequel la position des points de contour est déterminée, sachant que l'objet est saisi dans sa structure tridimensionnelle par plusieurs positions angulaires enregistrées dans une zone définie pour la détermination précise du contour,

   **caractérisé en ce**

   **qu'**une ligne de profil située à l'extérieur et à l'intérieur de l'objet analysé et s'étendant à travers le voisinage local du contour de l'objet est déterminée, que des points d'appui sont prédéfinis sur celle-ci,

   **que** les valeurs de restitution correspondantes sont déterminées le long de la ligne de profil pour les points d'appui,

   **qu'**est déterminé, à partir du tracé des valeurs de restitution le long et/ou à proximité de la ligne de profil dans le voisinage des points de contour pour la détermination précise du contour, la zone la plus abrupte, en particulier le point d'inflexion, maximum du gradient local des valeurs de restitution, ou qu'est déterminée une valeur seuil locale ($G_1$) des valeurs de restitution, ou que sont déterminées des positions pour la valeur locale de gris du fond ($G_H$) et la valeur de gris de l'objet ($G_O$) et

   **qu'**un point de contour ($K_1$) local est déterminé sur la ligne de profil.

2. Procédé selon la revendication 1,

   **caractérisé en ce**

   **que** le premier point de contour est déplacé le long de la ligne de profil vers le lieu du gradient négatif de valeur de gris le plus abrupt en tant que gradient de valeur de restitution pour la détermination d'un deuxième point de contour précis.

3. Procédé selon la revendication 1 ou 2,

   **caractérisé en ce**

   **que**, pour déterminer la valeur seuil locale à partir du premier point de contour ou du lieu du gradient négatif le plus abrupt le long de la ligne de profil orientée vers l'extérieur, sont déterminées respectivement une valeur de restitution d'objet et une valeur de restitution de fond et que ces valeurs sont utilisées pour déterminer la valeur seuil locale.

4. Procédé selon au moins l'une des revendications précédentes,

   **caractérisé en ce**

   **que** plusieurs autres lignes de profil s'étendant à proximité de la ligne de profil sont échantillonnées, que des valeurs seuils locales sont déterminées à partir des lignes de profil, et qu'à partir des valeurs seuils ainsi obtenues est déterminée une valeur seuil moyenne.

5. Procédé selon au moins l'une des revendications précédentes,

   **caractérisé en ce**

   **que** des observations statistiquement aberrantes sont saisies lors de la détermination de la valeur seuil locale par l'intermédiaire d'une condition de tolérance et que celles-ci ne sont pas prises en compte lors de la formation de la moyenne.

6. Procédé selon au moins l'une des revendications précédentes,

   **caractérisé en ce**

   **que** la ligne de profil s'étend perpendiculairement au contour de l'objet ou de manière inclinée sous un angle aigu par rapport à celui-ci.

7. Procédé selon au moins l'une des revendications précédentes,

   **caractérisé en ce**

   **que**, pour déterminer la position d'un point de contour, est déterminé respectivement un premier point de contour de l'objet analysé, à travers lequel point la ligne de profil est placée.

8. Procédé selon au moins l'une des revendications précédentes,

   **caractérisé en ce**

   **que**, pour déterminer la position d'un point de contour, la ligne de profil est placée dans la zone de transition entre objet et fond.

**9.** Procédé selon au moins l'une des revendications précédentes,
**caractérisé en ce**
**que**, pour déterminer la position du contour de la représentation tridimensionnelle de l'objet, une valeur seuil des valeurs de restitution (G) est déterminée, et que le premier point de contour est déterminé à partir de celle-ci.

**10.** Procédé selon au moins l'une des revendications précédentes,
**caractérisé en ce**
**qu'**une représentation tridimensionnelle de l'objet analysé est restituée par l'intermédiaire de plusieurs projections, sachant que des données de volume sont ainsi obtenues pour la représentation de l'objet analysé.

**11.** Procédé selon au moins l'une des revendications précédentes,
**caractérisé en ce**
**que** des valeurs de gris (G) sont affectées aux valeurs de restitution.

**12.** Procédé selon au moins l'une des revendications précédentes,
**caractérisé en ce**
**qu'**une normale ou une droite divergeant de celle-ci d'environ 15° au maximum, de préférence de jusqu'à 10°, est utilisée en tant que ligne de profil.

**13.** Procédé selon au moins l'une des revendications précédentes,
**caractérisé en ce**
**qu'**un point défini par extraction de contour, de préférence par extraction d'iso-surface, est utilisé en tant que premier point de contour ($K_1$).

**14.** Procédé selon au moins l'une des revendications précédentes,
**caractérisé en ce**
**que** le premier point de contour est déterminé au moyen de coordonnées.

**15.** Procédé selon au moins l'une des revendications précédentes,
**caractérisé en ce**
**que**, les valeurs de gris nécessaires pour déterminer le tracé des valeurs de restitution défini le long de la ligne de profil sont interpolées à partir de voxels voisins.

**16.** Procédé selon au moins l'une des revendications précédentes,
**caractérisé en ce**
**que**, pour déterminer la valeur seuil locale ($K_1$), le gradient négatif le plus fort est déterminé sur la ligne de profil orientée vers l'extérieur et que la valeur de restitution correspondante est utilisée en tant que valeur seuil locale.

**17.** Procédé selon au moins l'une des revendications précédentes,
**caractérisé en ce**
**que**, pour déterminer la valeur seuil locale à partir d'une valeur seuil de départ prédéfinie ou à partir du gradient négatif le plus fort le long de la ligne de profil orientée vers l'extérieur, respectivement une valeur de restitution de fond et une valeur de restitution d'objet ($G_W$, $G_H$) sont déterminées tout d'abord le long de cette même ligne de profil et que celles-ci sont utilisées en tant que valeurs seuils pour déterminer la valeur seuil locale ($G_1$).

**18.** Procédé selon au moins l'une des revendications précédentes,
**caractérisé en ce**
**qu'**une valeur moyenne issue de la valeur locale de fond ($G_H$) et de la valeur de gris de l'objet ($G_W$) est utilisée en tant que valeur seuil locale ($G_1$).

**19.** Procédé selon au moins l'une des revendications précédentes,
**caractérisé en ce**
**que**, pour déterminer la valeur seuil locale à partir d'une valeur seuil de départ prédéfinie ou à partir de la valeur négative la plus élevée des gradients le long de la ligne de profil orientée vers l'extérieur, respectivement une valeur de restitution de fond et une valeur de restitution d'objet ($G_W$, $G_H$) sont déterminées tout d'abord le long de cette même ligne de profil et que des points géométriques affectés à cette valeur locale de restitution de fond et d'objet sur la ligne de profil sont utilisés pour déterminer la position du point de contour.

**20.** Procédé selon au moins l'une des revendications précédentes,
**caractérisé en ce**
**que** d'autres lignes de profil voisines de la ligne de profil sont échantillonnées, que de celles-ci sont déterminées des valeurs seuils locales et qu'une valeur seuil moyenne est déterminée à partir des valeurs seuils locales.

**21.** Produit logiciel d'ordinateur qui, lorsqu'il est lancé sur un ordinateur, entraîne l'application d'un procédé selon l'une des revendications 1 à 20.

**22.** Application du procédé selon l'une des revendications 1 à 20 dans la tomographie assistée par ordinateur et l'imagerie par résonance magnétique.

**23.** Application du procédé selon l'une des revendications 1 à 20 dans la mesure tridimensionnelle par ultrasons.

**24.** Application du procédé selon l'une des revendications 1 à 20 dans la métrologie.

**25.** Dispositif de détermination précise de contour d'un objet industriel dans des méthodes d'analyse par imagerie, dans lequel un modèle en volume de l'objet est utilisé avec des valeurs de restitution, et que la position des points de contour est déterminée, sachant que le dispositif présente une source de rayonnement (2), un détecteur (6) détectant des rayonnements de la source de rayonnement et un manipulateur (4) disposé entre ceux-ci, au moyen duquel l'objet (8) peut être tourné, déplacé et/ou basculé pour enregistrer une structure tridimensionnelle dans une zone définie pour la détermination précise de contour, en particulier pour être utilisé dans un procédé selon l'une des revendications 1 à 24,
**caractérisé en ce**
**qu'**est prévu un dispositif d'extraction comprenant des moyens qui définissent une ligne de profil située à l'extérieur et à l'intérieur de l'objet analysé et s'étendant à travers le voisinage local du contour de l'objet et qui prédéfinissent des points d'appui sur celle-ci,
**qu'**est prévue une installation qui détermine des valeurs de restitution correspondantes le long de la ligne de profil pour les points d'appui, qui détermine, à partir du tracé des valeurs de restitution le long et/ou à proximité de la ligne de profil dans le voisinage des points de contour pour la détermination précise du contour, la zone la plus abrupte, en particulier le point d'inflexion, maximum du gradient local des valeurs de restitution, ou une valeur seuil locale ($G_1$) des valeurs de restitution ou détermine des positions pour la valeur locale de gris du fond et la valeur de gris de l'objet et
**qu'**est prévue une installation qui détermine un point de contour ($K_1$) local sur la ligne de profil.

**26.** Dispositif selon la revendication 25,
**caractérisé en ce**
**qu'**est prévue une installation (2, 4, 6) destinée à explorer les donnés de projection d'un objet analysé (8), qu'est prévue une installation destinée à restituer une représentation tridimensionnelle de l'objet analysé à partir des valeurs de l'échantillonnage, laquelle obtient des données de volume pour la représentation de l'objet analysé,
**qu'**est prévue une installation destinée à extraire la position du contour à partir de la représentation tridimensionnelle de l'objet, qui est déterminée par l'intermédiaire d'une valeur seuil des valeurs de restitution, et détermine la position des points de contour,
**que** l'installation d'extraction comprend des moyens qui déterminent une première valeur seuil des valeurs d'échantillonnage ($G_1$),
**que** l'installation d'extraction comprend des moyens permettant de déterminer la position d'un point de contour, qui déterminent respectivement un premier point de contour ($K_1$) de l'objet analysé, et comprend des moyens qui déterminent, à partir du tracé des valeurs de restitution autour du premier point de contour ($K_1$), une nouvelle valeur seuil locale ($G_1$) des valeurs de restitution, et
**qu'**est prévue une installation qui déplace sur la ligne de profil le premier point de contour vers un deuxième point de contour ($K_1$) sur le lieu de la valeur seuil locale.

**Fig. 1**

EP 1 861 822 B1

Fig. 3

Fig. 2

Fig. 4

Fig. 5

Fig. 6

Fig. 7

**Fig. 8**

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4885688 A
- US 4710876 A

- DE 10202732 A1

**In der Beschreibung aufgeführte Nicht-Patentliteratur**

- **MCCARTHY S et al.** Segmentation algorithm for objects with very low edge contrast. *PROCEEDINGS OF THE SPIE - THE INTERNATIONAL SOCIETY FOR OPTICAL ENGINEERING SPIE-INT. SOC. OPT. ENG USA,* 2004, vol. 5608 (1), 162-168

- **ISAAC N BANKMAN et al.** Segmentation Algorithms for Detecting Micro- calcifications in Mammograms. *IEE TRANSACTIONS ON INFORMATION TECHNOLOGY IN BIOMEDICINE,* Juni 1997, vol. 1 (2
- **Feldkamp, L.A. ; Davis, L.c. ; Kress, J.W.** Practical cone-beam algorithm. *J. Opt. Soc. Amer.,* 1984, vol. 1 (56), 612-619